(19) Europäisches Patentamt

European Patent Office

Office européen des brevets

(11) **EP 1 026 915 A2**

(12) **EUROPEAN PATENT APPLICATION**

(43) Date of publication:
09.08.2000 Bulletin 2000/32

(51) Int. Cl.⁷: **H04Q 11/04**

(21) Application number: 00101632.8

(22) Date of filing: 31.01.2000

(84) Designated Contracting States:
AT BE CH CY DE DK ES FI FR GB GR IE IT LI LU
MC NL PT SE
Designated Extension States:
AL LT LV MK RO SI

(30) Priority: 02.02.1999 US 243163

(71) Applicant: TRW Inc.
Redondo Beach, California 90278 (US)

(72) Inventors:
• Wright, David A.
Solana Beach, CA 92075 (US)

• Caso, Gregory S.
Hermosa Beach, CA 90254 (US)
• Linsky, Stuart T.
San Pedro, CA 90732 (US)

(74) Representative:
Schmidt, Steffen J., Dipl.-Ing.
Wuesthoff & Wuesthoff,
Patent- und Rechtsanwälte,
Schweigerstrasse 2
81541 München (DE)

(54) **Method and system for enhancing cell error ratio and cell misinsertion rate for a given cell loss ratio**

(57) A method and apparatus for enhancing the cell error ratio and the cell misinsertion rate for a given cell loss ratio is provided. A predetermined number, C, of ATM cells (150, 250) are packed together and encoded using a strong t-error correcting BCH block code, such as a Reed-Solomon code to produce an encoded block (162, 262). After transmission, the received data segment (156, 256) may include s errors. The data segment (156, 256) is decoded, and if s > t, decoder failure occurs with very high probability and the data segment is discarded. The CER obtained is superior to present ATM systems. The decoded block is unpacked into C ATM cells (160, 260). Optionally, the header fields (164, 264) of the C ATM cells may be decoded. In most cases where errors are present in the header, nonzero syndrome occurs with high probability, and the C ATM cells (160, 260) are discarded. The CMR obtained is superior to present ATM systems. The delivered ATM cells (160, 260) are virtually error free with very high certainty.

Figure 1

**Description**

BACKGROUND OF THE INVENTION

The present invention relates generally to digital communications techniques, and more particularly, to a high-integrity digital communications technique particularly suited for use in satellite systems.

Modern communications systems carry staggering amounts of data generated by numerous and diverse information sources. Some systems divide data traffic into discrete pieces which are referred to as "packets" or "cells," depending on the particular system. As an example, data may be transferred in Asynchronous Transfer Mode (ATM) cells. An ATM system supports high speed data transfers by dividing the data into individual, fixed-length cells. Each ATM cell is 53 bytes long and includes 48 information bytes (called an "information" or "payload" field) and 5 header bytes (called a "header" field). Data transfers in an ATM system are effectuated through an ATM protocol stack.

The ATM protocol stack is typically conceptualized as a layered model, each layer defining a particular function in the protocol stack and how each function interfaces with other layers. The primary layers of a typical ATM protocol reference model are the Physical layer (PHY) (the layer where cell structures are received and transmitted), the ATM layer (which handles routing, queing, and related functions) and the ATM Adaptation Layer (AAL) (which provides support for higher layer services). Each layer may contain one or more sublayers which define more particular functions performed within the associated layer. This layered construct permits systems with different physical interfaces to transport data independently of higher layer protocols. It is noted that although the discussion of the invention below proceeds with reference to ATM cells, the invention is not limited to such cells or to ATM technology.

ATM standards define the components of the five-byte header field of an ATM cell. Each header field identifies the destination, cell type, and priority of the associated cell. The header field also contains an 8-bit Header Error Check (HEC) field which detects and corrects errors in the header. The ATM cell header is then a codeword in a (40,32) error control code that can correct all single errors and detect all double errors in the 40-bit header field.

In traditional ATM systems, no error checking or correction is performed on the payload field at the Physical layer (PHY). Rather, higher layer protocols may perform error checking or correction on the payload field. A more detailed discussion of ATM protocols and ATM generally can be found in David E. McDysan and Darren L. Spohn, *ATM*: Theory and Application chs. 7-8 (1995), which are incorporated herein by reference in their entireties.

The data integrity of ATM methods, for example, is benchmarked by three criteria: cell loss ratio (CLR), cell error ratio (CER), and cell misinsertion rate (CMR). CLR represents the ratio of the number of dropped cells divided by the total number of cells received. Cells may be dropped as a result of two occurrences. The first is due to overflow of the buffers used for queuing ATM cells during the switching process. The second is due to errors in the cell header as detected by the HEC field. In communication systems that make use of ATM methods, the CLR is one of the primary system performance metrics. A CLR for a typical system is on the order of $10^{-6}$ (less than one part per million).

In terrestrial ATM systems, (for which ATM was originally designed), CLR occurs more frequently as a result of queue overflow rather than as a result of the bit error rate (BER) since ATM cells are typically transported in the physical layer by optical fiber for which the basic bit error rate is very small, on the order of parts per billion, so that the probability of header failure is very small. Therefore, CLR is primarily dominated by queue overflow in typical terrestrial systems.

As previously mentioned, the header field is protected by an HEC capable of correcting and detecting errors in the header field. An ATM header field, for example, is protected by a (40,32) error control code which is capable of correcting all single errors and of detecting all double errors (and most larger number of errors) in the 40-bit protected header field. In normal operation, a decoder for the ATM header, repairs cells with apparent single bit errors in the header and rejects cells with other apparent errors. Therefore, the probability that a detectable header error occurs is dominated by the probability of a double error, which is given by: $\binom{40}{2} * p^2$, where p is the BER. For $p = 10^{-8}$, the probability of detecting a double error (and, thus, having cause to discard the cell) is on the order of $8 \times 10^{-14}$, which is far smaller than the typical CLR due to queue overflows.

CER represents the probability that the payload field of a delivered cell contains one or more errors. The CER is dominated by the probability of a single error, or, in an ATM system for example, $384 * p$ (note, there are 48 x 8 = 384 bits in the payload field of an ATM cell). For $p = 10^{-8}$, the CER is approximately $4 \times 10^{-6}$, or four parts per million in typical terrestrial usage.

CMR is proportional to the probability that an "uninvited" cell will be delivered. Each ATM header field contains destination information akin to an address on an envelope. Other data transfer constructs also include similar address information. A misinserted cell is thus analogous to a letter that was received by a wrong address. CMR becomes more significant in processing satellite systems, as will be discussed later.

ATM was initially contemplated for deployment in terrestrial-based systems. For example, in a SONET (Switched Optical NETwork) system, ATM cells are delivered by optical fibers, with a very low BER. However, with the emergence of processing satellites, ATM's flexibility and scalability promise to take ATM where it was never before contemplated to go.

Several problems exist with switching ATM cells across satellite uplinks and downlinks, however. One is that the channel BER is much higher than is the BER for optical fiber networks, typically orders of magnitude higher (due to, for example, atmospheric conditions). This yields an unacceptably high CER necessitating steps to mitigate the effects of the error prone channel. A second problem in one satellite environment is that the CMR is increased when one physical layer attempts to demodulate ATM cells and decode when, in fact, no signal is present (i.e., noise only is present at the receiver). Thus, the implementation of ATM in satellite communications has not been feasible in the past.

Therefore, a need is present in the industry for a method and apparatus for enhancing cell error ratio and cell misinsertion rate for a given cell loss ratio which overcomes the disadvantages discussed above and previously experienced.

## BRIEF SUMMARY OF THE INVENTION

It is an object of the present invention to enhance the cell error ratio (CER) for a given cell loss ratio (CLR) in a data segment received by a processing satellite.

It is another object of the present invention to enhance the cell misinsertion rate (CMR) for a given CLR in a data segment received by a processing satellite.

It is another object of the present invention to provide virtually error-free data segments received from a processing satellite.

It is another object of the present invention to exploit the characteristics of an error control decoder to enhance CER and CMR.

It is another object of the present invention to discard ATM cells based on evidence that errors may exist in the cell, whether the header or the payload field before passing the cells from the physical layer to a higher layer.

It is another object of the present invention to discard ATM cells based on errors in the header field of at least one ATM cell, thereby reducing CMR to negligible levels.

It is another object of the present invention to free the HEC byte in the header field of an ATM cell for other uses, when CMR enhancement is not used.

It is another object of the present invention to enhance the transmission rate when no HEC check is performed.

One or more of the foregoing objects is met in whole or in part by a method and apparatus for enhancing the integrity of data transmitted to and/or from a processing satellite. The method includes the steps of establishing an error threshold, decoding a data segment to form a decoded data segment, determining whether the number of errors in the decoded data segment is less or equal than the threshold, and discarding the decoded data segment when the number of errors exceed the error threshold. The method may further include the steps of determining whether there are errors in a header field of an ATM cell, and discarding the cell when the presence of such errors in the header field is detected.

The apparatus includes a processing satellite having a receiver for receiving a data segment, and a decoder connected to the receiver for decoding the data segment to form a decoded data segment. The decoder includes the ability to sense when the error count output exceeds a predetermined error threshold and to discard the decoded data segment. The apparatus may further include a header decoder associated with the decoder, a packing circuit connected to the encoder for packing a predetermined number of ATM cells, and an unpacking circuit connected to the decoder for unpacking the decoded data segment.

## BRIEF DESCRIPTION OF THE SEVERAL VIEWS OF THE DRAWINGS

Fig. 1 shows a block diagram of a method of processing data segments incorporating a particular embodiment of the present invention.
Fig. 2 shows a block diagram of an apparatus for processing data segments according to a particular embodiment of the present invention.

## DETAILED DESCRIPTION OF THE INVENTION

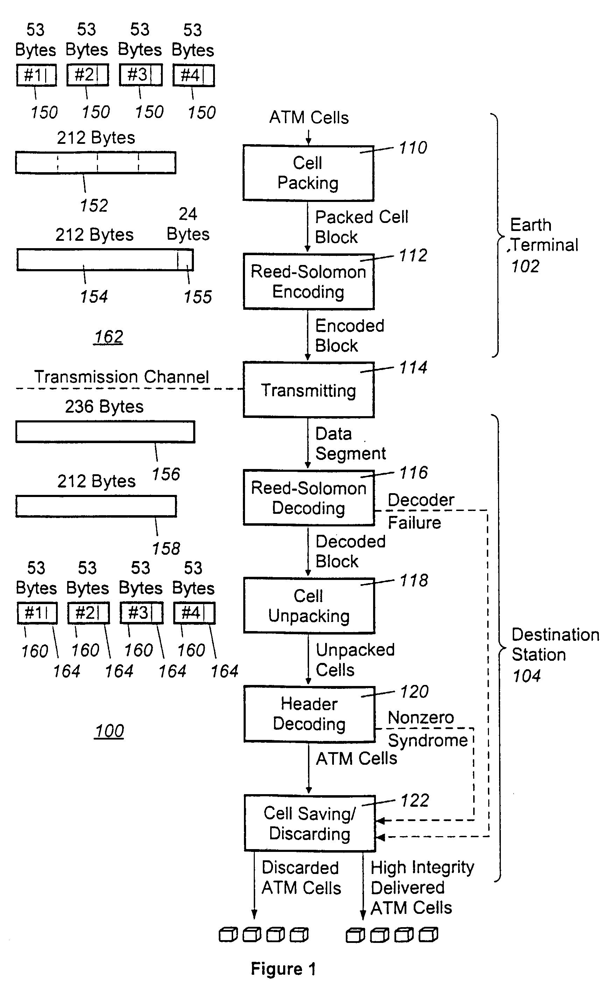

Fig. 1 shows a block diagram 100 of a method of processing data segments according to a particular embodiment of the present invention. Fig. 1 generally illustrates a ground station or other earth terminal 102 and a destination station 104 (e.g., a satellite). The earth terminal 102 generally applies the steps of packing 110 a predetermined number of cells 150, Reed-Solomon encoding 112 a packed cell block 154, and transmitting 114 the encoded block 162 to the destination station 104. The receiver 104 generally applies the steps of Reed-Solomon decoding 116 a data segment 156, unpacking the decoded block 118, decoding the cell headers 120, and saving or discarding cells 122. Next to each step in Fig. 1, there is shown a representation of the data elements as they progress through each step of the method. Note that although an earth terminal 102 is shown in Fig. 1, the present invention contemplates satellite-to-satellite data exchanges in addition to earth-to-satellite or satellite-to-earth exchanges.

A number 'C' of ATM cells are presented for transport. In a preferred embodiment, C = 4, although it is understood that any C > 0 may be used instead. It is further noted that although the discussion below proceeds with reference to ATM cells, the invention is not limited to the implementation of such cells. The invention may be implemented with any other suitable data segment having a payload and header field, the header field optionally having error checking bits capable of correcting and detecting errors in the header field.

Returning to Fig. 1, at the cell packing step 110, four ATM cells 150 are merged into a 212-byte information field 152, or packed cell block. Next, 2 * t parity bytes 155 are appended to the packed cell block in the Reed-Solomon encoding step 112. In a preferred embodiment, t = 12, which means that 12 or fewer errors are capable of being corrected in the coded block 162. Ideally, the probability of experiencing more than 12 errors within a coded block 162 should equal the CLR. Thus, the value of t depends on the tolerable amount of cell loss the system is willing to permit and on the error rate induced by the transmission channel. Stated differently, where s is the number of detected errors in a data segment 156, t is preferably chosen such that the probability of detecting more errors than can be corrected equals the CLR, or $p[s > t] = CLR$.

Returning to the Reed-Solomon encoding step 112, in a preferred embodiment, the packed cell block 152 is encoded using Reed-Solomon codes. It is understood that any error control code that robustly protects against random noise may be employed instead of a Reed-Solomon code provided that there exist decoding methods for the code that reliably permit the detection of virtually all cases where s exceeds t. For example, any block error correction codes that are members of the BCH family may be employed. The Reed-Solomon code is preferred because it achieves one of the largest possible minimum distances, $d_{min}$, of any linear code and because decoders therefor detect almost all instances where the number of errors exceeds the design distance. The Reed-Solomon code may optionally be concatenated with an inner code, such as a convolutional code, to provide greater data protection. The Reed-Solomon coding step (or other block code or convolutional code) may thus represent an outer code of a concatenated code, while a convolutional code or another block code may subsequently apply the inner code of a concatenated code.

The Reed-Solomon encoding step 112 produces a 236-byte encoded block 154 (4 53-byte ATM cells plus 24 parity bytes). In the transmitting step 114, the encoded block 154 is transmitted to a receiver 104 in the transmission channel assigned to the earth terminal 102. In a preferred embodiment, the receiver 104 is a processing satellite. As an example, a processing satellite may include numerous downlinks and/or uplinks which define separate coverage areas and may further employ frequency reuse techniques. The processing satellite may also switch uplink data after the uplink data has been demodulated and decoded, for separate transmission on the downlinks. After switching, the data is generally recoded and remodulated for the downlink prior to transmission. The switching function essentially breaks apart the uplink at the satellite, permitting unauthorized or random data to be discarded before being transmitted to another receiver. The processing satellite may, thereby, act like a filter, removing unauthorized or random data.

Following the transmitting step 114, the receiver 104 receives a 236-byte data segment 156. Note that the data segment 156 may contain noise instead of an encoded block of cells that were actively transmitted. When the transmission uplink is in quiescent condition (i.e., there is no signal present), the processing satellite may still actually demodulate and decode a data segment, due to antenna sidelobe effects, for example. Under this condition, the data segment 156 contains noise (e.g., random data). In any event, the data segment 156 contains s errors, where s >= 0.

Still referring to Fig. 1, the 236-byte data segment 156 is decoded at the Reed-Solomon decoding step 116. As with the encoding step, in a preferred embodiment, the decoding step applies Reed-Solomon decoding. However, any other robust error control method discussed previously may be applied instead. When s (number of errors present in the data segment 156) is greater than t (number of correctable errors in the encoded block 154), a condition known as decoder failure results such that the decoder recognizes, with high probability, the existence of more than t errors but is unable to further process data segment 156. The present invention exploits the condition of decoder failure by discarding the information content of the data segment 156 when decoder failure occurs.

In the ATM environment according to the present invention, for example, decoder failure discards cells with bad header and/or information fields before the cells are passed from the physical layer to the next layer. This is an important departure from existing ATM systems which blindly pass the ATM cell from the physical layer to the next without regard for the number of errors in the information field.

If decoder failure does not occur, the decoded block 158 is unpacked at step 118 into C unpacked cells 160, where C is the number of cells presented to the cell packing step 110. In a preferred embodiment, C = 4. For example, each of the four cells are 53-bytes wide, comprising a 48-byte payload and 5-byte header field. The 5-byte header field, for example, contains a 1-byte HEC field. The HEC byte forms a (40,32) error control code across the 40-bit header field and is capable of correcting all single errors and detecting all double errors.

Next, the header fields 164 of the unpacked cells 160 are decoded in step 120. This step is also called an HEC check. The HEC check is deemed to have failed if a nonzero syndrome is observed, i.e. if any error is detected in the header. In a preferred embodiment, if a nonzero syndrome is observed on any cell, all C cells are presented for discard. By discarding all C cells, CMR is enhanced, as explained in more detail below. Alternatively, however, only those cells for which nonzero syndrome was observed may be presented for discard at the cell save/discard step 122, although the CER and the CMR of cells not discarded in this alternative is generally poor.

Finally, the unpacked cells 160 are either saved or discarded at cell save/discard step 122 depending on whether a decoder failure or nonzero syndrome occurred. If a decoder failure or nonzero syndrome occurred, in a preferred embodiment, all C cells are discarded at step 122. As previously mentioned, step 122 could alternatively discard only those cells for which nonzero syndrome was observed although the beneficial effects on CER and CMR of this invention are compromised by so doing. If neither decoder failure nor nonzero syndrome occurs, the cells are saved at the cell save/discard step 122 for later transmission if at the satellite or for possible delivery to user applications if at an earth terminal. The resultant cells are very high integrity, virtually error-free cells.

The foregoing method produces high-integrity ATM cells by enhancing the CER and CMR for a given CLR. Generally, CER is enhanced by exploiting decoder failure to discard the information field of the data segment 156. CMR is generally enhanced by performing a post-decoder check 120 of the header fields of the unpacked cells 160. The specifics of how CER and CMR are enhanced are explained next.

The transmission conditions and parameters of the Reed-Solomon code are chosen such that decoder failure occurs at approximately the CLR, i.e., CLR = P[fail] , typically 5 parts per million. Similarly, t and the design $E_b/N_o$ (BER or signal-to-noise ratio) are chosen such that the probability that more than t errors occur in a data seament 156 equals P[fail]. If a data segment 156 contains more than t errors, and decoder failure does not occur, an event known as undetected error occurs. For Reed-Solomon codes the probability of an undetected error conditioned on decoder failure, P[unde], is very small, typically less than one part per billion for codes having the parameters of the preferred embodiment. Hence, for a block to be decoded in error both more than t errors must occur and the result must be undetectable and so the CER is the product CER = P[fail] * P[unde] , which is typically on the order of one part per quadrillion. This result is superior to the CER that obtains using standard ATM techniques.

When there is no signal present, but the decoder attempts to decode random noise, the probability of an undetected error becomes:

$$p[unde] = \frac{\sum_{s=0}^{t} \binom{n}{s} * (q - 1)^s}{q^{2t}} ,$$

where

$$q^{2t} = \frac{q^n}{q^k},$$

and where

| Symbol | Description |
| --- | --- |
| $q^k$ | number of codewords |
| $q^n$ | number of n-tuples |
| $\sum_{s=0}^{t} \binom{n}{s} * (q - 1)^s$ | volume of decoding sphere |
| $\binom{n}{s}$ | "n choose s" or $\dfrac{n!}{s! (n - s) !}$ |

In a preferred embodiment, for q = 256, k = 212, n 236, t = 12, P[unde] is on the order of a half part per billion or roughly $5 \times 10^{-10}$. This is the probability that an undetected error will occur when decoding noise. Such undetected error, when there is no signal present, represents a potential cell misinsertion since the apparent header of the falsely recovered cell may contain a valid ATM address. As explained above, a nonzero syndrome occurs following an HEC check when any detectable errors are present in the header field. When decoding random noise, the probability that any single HEC check produces a nonzero syndrome is 1/256 and the probability that all C cells have nonzero syndromes is $(1/256^C)$, typically one part in four billion for C = 4. Thus, the CMR is further reduced to CMR = P[unde] * $256^{-C}$ by the header decode step 122, typically on the order of less than one part per quadrillion. This result is superior to the CMR obtained using standard ATM techniques. Thus, the header decoding step 120 further reduces the CMR to a negligible probability, especially when no signal is present, by discarding all C cells.

It is noted that the foregoing values are calculated for a preferred embodiment, and may be changed to obtain a different CER and CMR for a given CLR. The values of each of the foregoing variables will depend, in part, on the level of tolerable CER and CMR in a given system. The foregoing results obtain far better CER and CMR than standard ATM systems do, and some systems may require a less robust CER and CMR. Still other systems may require even better CER and CMR than obtained above, and both of such systems are within the intended, scope of the present invention.

It is further noted that the HEC byte need not be checked in cases where a CMR based only on P[unde] is sufficiently stringent. It is contemplated that the header decoding step 120 could be eliminated, if CMR enhancement is not desired. The HEC byte could be freed for other uses, such as, for example, increasing the payload field by one byte, or using the HEC byte to provide a parity check across the payload field, or the like. Alternatively, the HEC byte could be eliminated, reducing the overall cell size by one byte. It is reemphasized that the present invention is not limited to ATM cells, or to ATM technology in general, and therefore, the cell size is not limited to 53 bytes.

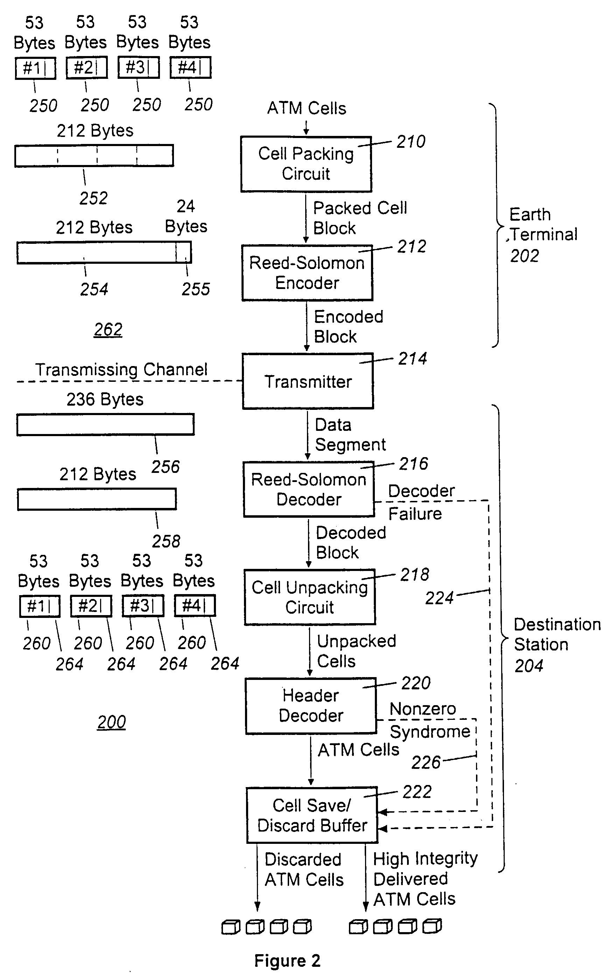

Turning now to Fig. 2, Fig. 2 shows a block diagram 200 of an apparatus for processing data segments according to a particular embodiment of the present invention. Fig. 2 generally illustrates an earth terminal 202 and a destination station 204. The earth terminal 202 generally includes a cell packing circuit 210, a Reed-Solomon encoder 212, and a transmitter 214. The receiver 204 generally includes a Reed-Solomon decoder 216, a cell unpacking circuit 218, a header decoder 220, and a cell save/discard buffer 222 responsive to a decoder failure output 224.

Preliminarily, it is noted that the following description includes all of the alternative embodiments and modifications contemplated above in connection with the description of Fig. 1. To avoid repetition, a recitation of the alternative embodiments and modifications mentioned above in connection with Fig. 1 is omitted.

Returning to Fig. 2, a number 'C' of ATM cells 250 are presented to a cell packing circuit 210. The cell packing circuit 210 can be implemented in, for example, a multiplexer circuit. The cell packing circuit 210 takes a number of C 53-byte ATM cells 250 as input, and produces a 53 * C byte-long packed cell block 252. Those skilled in the art will appreciate that the cell packing circuit 210 may be implemented in many different ways, including general CPU and working memory programmed control.

The packed cell block 254 is presented next to a Reed-Solomon encoder 212. The Reed-Solomon encoder appends 2 * t bytes of parity 255 to the packed cell block. In a preferred embodiment, the Reed-Solomon encoder uses a (236,212) code over a 256-element Galois field, with t = 12. The Reed-Solomon encoder 212 produces an encoded block which may be either passed to a transmitter 214 for transmission in the channel associated with earth terminal 202 to a receiver 204, or, alternatively, passed to an inner coding circuit (not shown) for applying an inner code to the encoded block. The inner code could be, for example, a convolutional code. Then, the resultant inner-coded block would be passed to the transmitter 214.

The transmitting channel introduces s>=0 errors in the encoded block. At the receiver, a data segment 256, containing s errors, is presented to a Reed-Solomon decoder 216. If s > t, then decoder failure results with high probability. The block (e.g., Reed-Solomon) decoder 216 may include a decoder failure output 224 which is connected to discard circuitry, for example the cell save/discard buffer 222. The Reed-Solomon decoder may include circuitry to pass the entire data segment 256 directly to the cell/save discard buffer 222 in response to the decoder failure output 224. If decoder failure does not occur, the resultant decoded block 258 may be passed directly to the cell unpacking circuit 218 which essentially performs the reverse of the cell packing circuit 210. Like the cell packing circuit 210, the cell unpacking circuit 218 may be implemented in a multiplexer or other similar circuitry. If decoder failure does occur, discard circuitry or software in the block decoder 216 or save/discard buffer 222 discards the decoded block 258, for example, by not saving the decoded block 258 in memory, by not passing the decoded block 258 to the unpacking circuit 218, or by overwriting the decoded block 258 with subsequently received data.

Still referring to Fig. 2, the cell unpacking circuit 218 produces C unpacked cells 260. Each of the C unpacked cells 260 contain a payload field and a header field 264. The header field 264 may contain a Header Error Control (HEC) field which forms a (40,22) code across the header field, and is at least capable of correcting all single errors in the header field.

Next, C unpacked cells 260 are presented to a header decoder 220. The header decoder 220 decodes the header field and may include a nonzero syndrome control signal 226 for alerting discard circuitry (e.g., the cell save/discard buffer 222) that a header error was discovered. Alternatively, the header decoder 220 may itself include discard circuitry as described above with reference to the block decoder 216. As noted previously, the header decoder 220 may be eliminated or bypassed if an HEC check is not desired.

The cell save/discard buffer 222 determines whether to discard the ATM cells or save them for later transmission. The cell save/discard buffer 222 may be implemented using any conventional memory device, such as RAM or FLASH memory, or in an ASIC or through software, and may further. The discard circuitry in the save/discard buffer 222 may include an input from the header decoder 220 indicating whether a nonzero syndrome occurred and an input from the Reed-Solomon decoder 216 indicating whether decoder failure occurred. If at least one of those conditions are met, the discard circuitry instructs the memory device to disregard the ATM cells presented for storage. Otherwise, the ATM cells are stored for later transmission. Note that it is contemplated that not all cells need to be discarded. In a preferred embodiment, the cell save/discard buffer discards all C ATM cells when necessary. However, the cell save/discard buffer may alternatively only discard those cells for which a nonzero syndrome occurred.

The high integrity cells that are not discarded are virtually error free. The BCH code protection on the cells reject data segments with more than t errors with very high probability. As a result, the CER obtained is superior to present data transmission systems. In addition, the optional post-BCH check of the headers provide another opportunity to reject cells with undetected errors, further enhancing the CMR. The CMR obtained by performing an HEC check is superior to present data transmission systems. Accordingly, both the header and payload fields of cells that are delivered according to the present invention are virtually error free.

The present invention thus provides a method and apparatus for greatly enhancing satellite communication. In particular, the present invention reduces CER and CMR of data transmitted through the satellite, even in the presence of significant uplink noise. Thus, for example, the broadly accepted terrestrial ATM communication standard may now be reliably switched through a satellite.

While particular elements, embodiments and applications of the present invention have been shown and described, it will be understood, of course that the invention is not limited thereto since modifications may be made by those skilled in the art, particularly in light of the foregoing teachings. It is therefore contemplated by the appended claims to cover such modifications as incorporate those features which come within the spirit and scope of the invention.

**Claims**

1. A method for enhancing the integrity of data being transmitted, the method comprising:

   establishing an error threshold;
   decoding a data segment to form a decoded data segment;
   determining whether the number of errors in said decoded data segment exceeds a threshold; and
   discarding said decoded data segment when said number of errors exceed said error threshold.

2. The method of claim 1, wherein said decoding step comprises the step of decoding a predetermined number of Asynchronous Transfer Mode (ATM) cells in said a data segment.

3. The method of claim 1 wherein said decoding step comprises the step of decoding a payload field and a header field associated with said payload field; and further comprising:

   decoding to detect the presence of errors in said header field associated with said at least one payload field; and
   discarding said at least one payload field when said number of errors in said header field exceeds a predetermined threshold.

4. The method of claim 3, further comprising:

   receiving said data segment at a satellite from an uplink beam; and
   transmitting said payload field from said satellite in a downlink beam when said payload field is not discarded.

5. The method of claim 1, further comprising:

   receiving said data segment at a satellite from an uplink beam; and
   transmitting said decoded data segment from said satellite in a downlink when said decoded data segment is not discarded.

6. The method of claim 5, wherein said decoding a data segment step comprises applying Reed-Solomon decoding.

7. A method for enhancing the integrity of data transferred through a processing satellite, the method comprising:

   encoding a data segment at a ground station to form an encoded data segment;
   transmitting said encoded data segment from the ground station to a satellite;
   receiving said encoded data segment at said satellite;
   establishing an error threshold;
   decoding said encoded data segment to form a decoded data segment;
   determining whether the number of errors in said decoded data segment exceed a threshold; and
   discarding said decoded data segment when said number of errors exceed said error threshold.

8. The method of claim 7 wherein said encoding step comprises applying an outer code and an inner code to form said encoded data segment; and wherein said decoding step comprises decoding said inner code and said outer code to form said decoded data segment.

9. The method of claim 8, wherein said encoding step comprises applying a convolutional inner code.

10. The method of claim 7, wherein said decoding step comprises decoding a predetermined number of Asynchronous Transfer Mode (ATM) cells.

11. The method of claim 10 further comprising:

   packing said predetermined number of ATM cells at said ground station to form said data segment;
   unpacking said decoded data segment at said satellite to recover said predetermined number of ATM cells.

12. The method of claim 7 wherein said decoding step comprises decoding at least one payload field and a header field associated with said at least one payload field; and further comprising:

   detecting the presence of errors in said header field; and
   discarding said at least one payload field when errors are detected in said header field.

13. A satellite data decoding system for enhancing the integrity of data transmitted from a satellite, the data decoding system comprising:

   a receiver in a satellite for receiving a data segment;
   a block decoder connected to said receiver for decoding said data segment to form a decoded data segment;
   a decoder failure output responsive to errors in said decoded data segment; and
   discard circuitry that discards said decoded data segment in response to said decoder failure output.

14. The data decoding system of claim 13, wherein said block decoder is a Reed-Solomon decoder.

15. The data decoding system of claim 13, wherein said data segment comprises at least one Asynchronous Transfer Mode (ATM) cell.

16. The data decoding system of claim 15 further comprising:

   a packing circuit connected to said encoder for packing said predetermined number of ATM cells; and
   an unpacking circuit connected to said decoder for unpacking said decoded data segment to form at least one ATM cell and associated cell header.

53          53          53          53
Bytes       Bytes       Bytes       Bytes

| #1 | | #2 | | #3 | | #4 |

150         150         150         150

212 Bytes

152

212 Bytes                     24
                            Bytes

154                         155

*162*

Transmission Channel

236 Bytes

156

212 Bytes

158

53          53          53          53
Bytes       Bytes       Bytes       Bytes

| #1 | | #2 | | #3 | | #4 |

160 \       160 \       160 \       160 \
    164         164         164         164

*100*

ATM Cells

Cell
Packing — 110

Packed Cell
Block

Reed-Solomon
Encoding — 112

Encoded
Block

Transmitting — 114

Data
Segment

Reed-Solomon
Decoding — 116

Decoded
Block

Cell
Unpacking — 118

Unpacked
Cells

Header
Decoding — 120

ATM Cells

Cell Saving/
Discarding — 122

Discarded
ATM Cells

High Integrity
Delivered
ATM Cells

Earth
Terminal
*102*

Decoder
Failure

Destination
Station
*104*

Nonzero
Syndrome

**Figure 1**

53 Bytes  53 Bytes  53 Bytes  53 Bytes

| #1 | | #2 | | #3 | | #4 |

250    250    250    250

ATM Cells

212 Bytes

252

212 Bytes   24 Bytes

254    255

262

**Cell Packing Circuit** — 210

Packed Cell Block

**Reed-Solomon Encoder** — 212

Encoded Block

Earth Terminal 202

Transmissing Channel

**Transmitter** — 214

236 Bytes

256

212 Bytes

258

Data Segment

**Reed-Solomon Decoder** — 216

Decoder Failure

Decoded Block

53 Bytes  53 Bytes  53 Bytes  53 Bytes

| #1 | | #2 | | #3 | | #4 |

260   260   260   260

264   264   264   264

200

**Cell Unpacking Circuit** — 218

224

Unpacked Cells

**Header Decoder** — 220

Nonzero Syndrome

ATM Cells

226

**Cell Save/ Discard Buffer** — 222

Destination Station 204

Discarded ATM Cells

High Integrity Delivered ATM Cells

**Figure 2**